# EUROPÄISCHE PATENTSCHRIFT

(11) **EP 3 501 287 B1**
(45) Veröffentlichungstag und Bekanntmachung des Hinweises auf die Patenterteilung: **02.09.2020**
(21) Anmeldenummer: 17209076.3
(22) Anmeldetag: 20.12.2017
(51) Int. Cl.: A22C 11/02

(54) **VORRICHTUNG ZUM FÜLLEN SCHLAUCHFÖRMIGER HÜLLEN**
DEVICE FOR FILLING TUBULAR CASINGS
DISPOSITIF DE REMPLISSAGE D'ENVELOPPES EN FORME DE TUYAU

(43) Veröffentlichungstag der Anmeldung: 26.06.2019
(73) Patentinhaber: VEMAG Maschinenbau GmbH, 27283 Verden/Aller (DE)
(72) Erfinder: Mach, Matthias, 30539 Hannover (DE); Hagedorn, Jan-Nils, 27283 Verden (DE); Matthies, Heiner, 27419 Kalbe (DE); Grote, Olaf, 27324 Eystrup (DE); Lewin, Alexander, 27283 Verden (DE)
(74) Vertreter: Eisenführ Speiser

(56) Entgegenhaltungen:
- EP-A1- 3 178 326
- DE-A1- 10 001 423
- DE-A1-102007 025 583
- US-A- 3 317 950
- US-A1- 2008 311 835

## Beschreibung

Die Erfindung bezieht sich auf eine Vorrichtung zum Füllen von schlauchförmigen Hüllen mit einer pastösen Masse, insbesondere von Darmraupen mit Wurstbrät, mit einem um seine Längsachse dreh- und antreibbaren Füllrohr, auf das eine mit der Masse befüllbare Hülle aufziehbar ist, einem Aufnahmeteil, an dem das Füllrohr drehbeweglich aufgenommen ist und einer Antriebseinheit zum Antreiben des Füllrohres.

Solche vorbekannten Füllvorrichtungen werden bei der industriellen Produktion von Würsten verwendet. Die Füllvorrichtungen werden in Verbindung mit Füllmaschinen zum Herstellen von Wurststrängen eingesetzt, mittels derer eine pastöse Masse wie Wurstbrät oder dergleichen erzeugt und in eine schlauchförmige Hülle eingegeben oder eingefüllt wird. Das Einfüllen der pastösen Masse in die schlauchförmige Hülle kann kontinuierlich oder portionsweise erfolgen. Als schlauchförmige Hülle, auch bezeichnet als Darmraupe, kann ein Kunstdarm oder ein Naturdarm verwendet werden. Vorliegend ist unter einer pastösen Masse eine Lebensmittelmasse zu verstehen, die fließfähig ist, und durch Beaufschlagung mit einem Druck über eine rohrförmige Leitung transportiert werden kann. Als pastöse Masse ist vorliegend neben einer Fleisch- oder Wurstmasse auch eine Teigmasse zu verstehen.

Nach dem Einfüllen der Masse in die schlauchförmige Hülle wird ein bereits befüllter Hüllenabschnitt beispielsweise durch Drehen des vorgelagerten Füllrohres verschlossen.

Dabei ist das Füllrohr mit der sich darauf befindlichen gerafften schlauchförmigen Hüllen mit einer Darmbremseinheit in Kontakt, die derart miteinander zusammenwirken, dass das Füllrohr und die darauf aufgezogene Hülle gemeinsam eine Drehbewegung ausführen und eine Abdrehstelle generiert werden kann. Zudem hält die Darmbremseinheit die Hülle beim Befüllen straff. Nach dem vollständigen Befüllen einer auf das Füllrohr aufgezogenen schlauchförmigen Hülle ist ein Hüllenwechsel notwendig, bei dem eine neue Hülle auf das Füllrohr aufgezogen wird.

Zum Aufziehen einer neuen Hülle sind das Füllrohr und die Darmbremseinheit voneinander zu trennen. Die Darmbremseinheit kann dazu über eine von Hand betätigbare Verstelleinrichtung zunächst in axialer Richtung zum Füllrohr bewegt und dann seitlich verschwenkt werden. Das vordere Ende des Füllrohres ist damit zugänglich, sodass eine neue schlauchförmige Hülle auf das Füllrohr aufgezogen werden kann. Zum Inkontaktbringen der Darmbremseinheit mit dem neu bestückten Füllrohr ist die Darmbremseinheit über die Verstelleinrichtung in entgegengesetzter Abfolge zunächst seitlich zu verschwenken und dann in Längsrichtung des Füllrohres zu bewegen.

Zur Umsetzung der durch die Darmbremseinheit beim Hüllenwechsel notwendigerweise auszuführenden aufeinanderfolgenden Bewegungsschritte, ist die Darmbremseinheit über eine Verstelleinrichtung mit einem konstruktiv aufwendigen Funktionsprinzip an den bekannten Füllvorrichtungen aufgenommen.

DE 10 2007 025 583 A1 oder US 2008/0311835 A1 betreffen jeweils eine Vorrichtung zum Herstellen von Ketten von miteinander verbundenen Lebensmitteln mit mehreren Stopfrohren und einer Stopfrohr-Bewegungseinrichtung. Jedes Stopfrohr ist mit einem Hohlspindelelement verbunden, das in der Stopfposition über eine Kopplungseinrichtung mechanisch oder unter Verwendung einer Magnetkraft mit einem weiteren Hohlspindelelement gekoppelt wird.

Der vorliegenden Erfindung lag daher die Aufgabe zugrunde, eine Vorrichtung zum Füllen schlauchförmiger Hüllen der vorbezeichneten Art aufzuzeigen, bei der das Bestücken eines Füllrohrs mit einer neuen schlauchförmigen Hülle auf dem bei einer gleichzeitig vereinfachten konstruktiven Ausgestaltung sicher möglich ist.

Die Erfindung löst die ihr zugrundeliegende Aufgabe bei einer Vorrichtung zum Füllen von schlauchförmigen Hüllen der vorbezeichneten Art gemäß den Merkmalen des Gegenstands von Anspruch 1. Insbesondere ist eine Magnetkupplung zum Herstellen und Trennen einer zumindest kraftschlüssigen Drehmomentübertragung zwischen der Antriebseinheit und dem Füllrohr vorgesehen, welche einen Antriebsläufer und einen zum Antriebsläufer in Längsrichtung des Füllrohres verstellbaren Abtriebsläufer aufweist, wobei die Magnetkupplung als eine berührungslose Magnetkupplung mit einem Innenläufer und einem Außenläufer mit koaxial angeordneten Drehachsen ausgebildet ist, welche zur Übertragung des Drehmomentes in axialer Richtung zumindest abschnittsweise einander überdecken.

Der Erfindung liegt die Erkenntnis zugrunde, dass mithilfe einer Magnetkupplung ein Drehmoment von der Antriebseinheit auf das Füllrohr übertragen werden kann, ohne dass das Füllrohr mit der Antriebseinheit zwingend mechanisch gekoppelt ist. Dadurch kann bevorzugt, anstelle der Darmbremseinheit, das Füllrohr in axialer Richtung bewegt und somit in eine Beladeposition überführt werden, in der eine neue Hülle aufgezogen werden kann. Zum Inkontaktbringen mit der Darmbremseinheit wird wiederum das Füllrohr nunmehr in entgegengesetzter Richtung bewegt. Dadurch fährt das freie Ende des Füllrohres, bestückt mit der neuen schlauchförmigen Hülle in die Darmbremseinheit ein. Zudem wird die kraftschlüssige Verbindung zwischen dem Antriebsläufer und dem Abtriebsläufer für eine kraftschlüssige Drehmomentverbindung hergestellt (ohne ein mechanisches Ineinandergreifen von einer die Antriebsbewegung von der Antriebseinheit zum Füllrohr übertragenden Kupplungseinrichtung). In einer bevorzugten Ausführungsform der Erfindung wird eine Magnetkupplung verwendet, deren Antriebsläufer und Abtriebsläufer miteinander in Anlage bringbare Kontaktflächen zur kraftschlüssigen Übertragung des Drehmomentes aufweisen.

Erfindungsgemäß ist die Magnetkupplung eine berührungslose Magnetkupplung, wobei der Antriebsläufer vorzugsweise als Außenläufer und der Abtriebsläufer vorzugsweise als Innenläufer mit koaxial angeordneten Drehachsen ausgebildet sind, welche zur Übertragung des Drehmoments in axialer Richtung zumindest abschnittsweise einander überdecken. Das Vorsehen einer berührungslosen Magnetkupplung stellt eine bevorzugte Möglichkeit zur kraftschlüssigen Drehmomentübertragung dar. Der Antriebsläufer und der Abtriebsläufer können durch einfaches Bewegen der Komponenten miteinander gekoppelt oder voneinander entkoppelt werden. Der Kraftschluss kann somit einfach aufgehoben und auch wieder hergestellt werden. Mit der Ausgestaltung als Innen- und Außenläufer, die zumindest in Achsrichtung einander teilweise überdecken, ist erreicht, dass ein Nachrücken des Füllrohres in axialer Richtung im laufenden Betrieb ohne eine Beeinflussung des Kraftflusses von der Antriebseinrichtung in Richtung des Füllrohres möglich ist.

In einer Weiterbildung der vorliegenden Erfindung ist die Magnetkupplung als Dauermagnetkupplung ausgebildet, wobei vorzugsweise der Antriebsläufer und/oder der Abtriebsläufer jeweils eine oder mehrere Dauermagneten aufweisen. Mit der Verwendung von Dauermagneten an Antriebs- und/oder Abtriebsläufer ist eine vereinfachte Ausgestaltung der Magnetkupplung als vorzugsweise berührungslose Dauermagnetkupplung möglich. Vorzugsweise werden am Antriebsläufer und am Abtriebsläufer jeweils mehrere und eine identische Anzahl an Dauermagneten angeordnet. Bevorzugt sind zueinander benachbarte Dauermagneten mit abwechselnder Ausrichtung ihrer Pole an jeweils dem Innen- und Außenläufer angeordnet. In einer bevorzugten Ausführungsform der Erfindung weist der Antriebs- und Abtriebsläufer eine gerade Anzahl an Dauermagneten von mindestens 6, 8, 10 oder mehr Dauermagneten auf.

Eine Ausführung der Erfindung sieht vor, dass die Magnetkupplung als Elektromagnetkupplung ausgebildet ist, wobei vorzugsweise der Antriebsläufer und/oder der Abtriebsläufer jeweils eine oder mehrere Elektromagneten aufweisen. Anstelle mittels Dauermagneten wird das benötigte magnetische Feld zwischen Antriebs- und Abtriebsläufer dann mittels jeweils einer Spule an Antriebsläufer und Abtriebsläufer die einen entsprechende Anzahl von Wicklungen haben oder mittels mehrerer stromdurchflossener Spulen an Antriebsläufer und Abtriebsläufer erzeugt.

In einer weiteren Ausführungsform kann die erfindungsgemäße Magnetkupplung auch durch eine Kombination von ein oder mehreren beispielsweise am Antriebsläufer angeordneten Elektromagneten und mehreren am Abtriebsläufer angeordneten Dauermagneten ausgebildet sein. Der Antriebsläufer ist in dieser Ausführung als Stator mit einem sich drehenden Magnetfeld (was auch als Drehfeld bezeichnet wird) ausgebildet. Dadurch kann auf eine separate Antriebseinheit zum mechanischen Antreiben des Antriebsläufers verzichtet werden.

Vorzugsweise ist in einer Ausführungsform der Erfindung das Aufnahmeteil mittels einer Führungseinrichtung in Längsrichtung des Füllrohres schiebbeweglich gelagert. Das Aufnahmeteil, mit dem das Füllrohr mit zumindest einem seiner Enden drehbar gekoppelt ist, kann in Längsrichtung des Füllrohres verschoben werden. Bevorzugt ist das Füllrohr über ein Drehlager am Aufnahmeteil angeordnet. Das Aufnahmeteil selbst ist vorzugsweise drehfest an der erfindungsgemäßen Füllvorrichtung aufgenommen. Mit dem Verschieben des Aufnahmeteils wird gleichzeitig auch das in axialer Richtung relativ zum Aufnahmeteil fest aufgenommene Füllrohr in seiner Längsrichtung bewegt. Bevorzugt weist das Aufnahmeteil eine Mittenachse auf, die koaxial zu einer Mittenachse des Füllrohres verläuft. Zum Überführen des Füllrohres in seine Beladeposition wird bevorzugt an der Führungseinrichtung oder dem Aufnahmeteil eine für die Verstellbewegung des Aufnahmeteils wirkende Verstellkraft erzeugt.

Gemäß einer bevorzugten Weiterbildung weist die Führungseinrichtung wenigstens einen Führungsschlitten auf, der entlang einer parallel zum Füllrohr verlaufenden Führung bewegbar ist. Mittels des Führungsschlittens ist das Aufnahmeteil für das daran drehbar gelagerte Füllrohr fest verbunden, die den Führungsschlitten führende Führung umfasst bevorzugt zwei parallel zueinander verlaufende Führungselemente, welche insbesondere parallel zur Längsachse des Füllrohres an der Füllvorrichtung ausgerichtet sind. Führungsschlitten und die den Führungsschlitten aufnehmende Führung bilden bevorzugt eine Gleitführung aus. Zum Verstellen des Führungsschlittens entlang der Führung ist der Führungsschlitten bevorzugt mit einem Verstellantrieb, wie beispielsweise einem Riemenantrieb, gekoppelt.

In einer bevorzugten Ausführungsform der Füllvorrichtung weist die Führungseinrichtung mit ihren Führungselementen und den entlang der Führungselemente schiebbeweglich aufgenommenen Führungsschlitten einen Verstellbereich auf, der größer ist als die Gesamtlänge des Füllrohres.

Vorzugsweise ist der Abtriebsläufer drehfest mit dem Füllrohr gekoppelt, insbesondere drehfest mit dem Füllrohr verbunden. Damit ist eine sichere Übertragung der von der Antriebseinheit erzeugten Drehbewegung über die Magnetkupplung auf das Füllrohr gewährleistet. Insbesondere ist der Abtriebsläufer in einer Ausführungsform direkt mit dem Füllrohr gekoppelt. In einer anderen Ausführungsform der erfindungsgemäßen Füllvorrichtung ist der Abtriebsläufer über ein Kopplungsteil bzw. ein das Füllrohr aufnehmendes Bauteil drehfest verbunden.

Gemäß einer bevorzugten Weiterbildung ist der Abtriebsläufer an einer Zuführleitung für die zu verarbeitende und durch das Füllrohr geleitete pastöse Masse angeordnet, an deren freien Ende ein erstes Ende des Füllrohres angeordnet und/oder wobei die Zuführleitung vorzugsweise zumindest mit einem Abschnitt drehbar am Aufnahmeteil gelagert ist. Der Abtriebsläufer ist bevorzugt über die Zuführleitung drehfest mit dem Füllrohr verbunden. Mittels der Zuführleitung ist insbesondere eine fluidleitende Verbindung von einer der Zuführleitung vorgeschalteten Förderpumpe für die pastöse Masse in Richtung des Füllrohres bewirkt. Die Zuführleitung ist vorzugsweise mit einem Abschnitt über ein Drehlager am Aufnahmeteil aufgenommen. Das Füllrohr ist insbesondere am freien Ende der Zuführleitung angeordnet, wobei die Zuführleitung und das Füllrohr Mittenachsen aufweisen, die koaxial angeordnet sind. Damit sind eine Unwucht und etwaige damit verbundene Schwingungen bei Drehung des Füllrohres vermieden. Vorzugsweise weist die Zuführleitung einen Außendurchmesser auf, der um ein Vielfaches größer ist als der Außendurchmesser des Füllrohres. In einer Ausführungsform der Erfindung weist der Außendurchmesser der Zuführleitung zum Außendurchmesser des Füllrohres ein Verhältnis auf, das im Bereich von etwa 3:1 bis etwa 10:1 liegt. In einer alternativen Ausführung kann der Außendurchmesser der Zuführleitung auch kleiner sein als der Außendurchmesser des Füllrohres.

Gemäß einer bevorzugten Weiterbildung ist die am Aufnahmeteil drehbar aufgenommene Zuführleitung als längenveränderliches Teleskoprohr ausgebildet oder ein Abschnitt der Zuführleitung ist als Förderschlauch ausgebildet. Mit dem Vorsehen eines Teleskoprohres, bzw. eines Förderschlauches als Abschnitt der Zuführleitung ist eine Verstellbewegung des Füllrohres in dessen Achsrichtung und eine damit verbundene Abstandsänderung zwischen dem das Füllrohr aufnehmenden Aufnahmeteil der Füllvorrichtung und einer der Füllvorrichtung vorgeschalteten Förderpumpe bewirkt. Eine fluidleitende Entkopplung des Füllrohres von der Förderpumpe oder ein Verstellen der gesamten Füllmaschine mit ihrer Förderpumpe in Längsrichtung des Füllrohres ist dadurch vermieden. Bevorzugt weist die als Teleskoprohr ausgebildete Zuführleitung mehrere ineinander schiebbare Rohrabschnitte unterschiedlichen Durchmessers auf. Die Rohrabschnitte sind bevorzugt zueinander über entsprechende Dichtungen fluiddicht ausgebildet. Ein als Zuführleitung verwendeter flexibler Förderschlauch ist ein einer möglichen Ausführungsform in einer Schlaufe gelegt, sodass die Einströmrichtung der pastösen Masse in den Förderschlauch und die Austrittsrichtung der pastösen Masse aus dem Förderschlauch in der vorliegenden Ausführungsform einander entgegengesetzte Richtungen aufweisen.

In einer bevorzugten Ausführungsform der Erfindung weist, unter Verwendung eines Förderschlauches als Zuführleitung, der Auslassbereich einer der Füllvorrichtung vorgeschalteten Förderpumpe und der Einlassbereich des Aufnahmeteils, ausgebildet aus zumindest einem Abschnitt der Zuführleitung, einen seitlichen bzw. radialen Versatz auf. Das Füllrohr der Füllvorrichtung ist zu einer der Füllvorrichtung vorschaltbaren Förderpumpe nicht fluchtend ausgerichtet.

Eine Weiterbildung der erfindungsgemäßen Vorrichtung sieht vor, dass der Antriebsläufer, bezogen auf seine Drehachse, in Achsrichtung feststehend zur Antriebseinheit angeordnet ist, vorzugsweise innerhalb eines Abdrehgehäuses. Mit der feststehenden Anordnung des Antriebsläufers zur Antriebseinheit in Achsrichtung ist eine vereinfachte Übertragung der Drehbewegung auf die Antriebsseite der Magnetkupplung bewirkt. Antriebseinheit und Antriebsläufer der Magnetkupplung weisen somit eine feste Ausrichtung zueinander auf, so dass die Übertragung der Drehbewegung über ein längenunveränderliches Übertragungsmittel vorgenommen werden kann.

Vorzugsweise ist der Antriebsläufer mittels eines Zahnriemens mit der Antriebseinheit eine Drehbewegung übertragend gekoppelt. Mittels eines Zahnriemens können vorhandene Abstände zwischen dem Antriebsläufer und der Antriebseinheit einfach überbrückt werden. Mittels des Zahnriemens ist zudem eine schlupffreie Übertragung des durch die Antriebseinheit erzeugten Drehmoments gewährleistet. Insbesondere intervallartig erzeugte Drehbewegungen, also Drehbewegungen, die in relativ kurzen Zeitabständen starten und wieder gestoppt werden, können über einen Zahnriemen schlupffrei auf den Antriebsläufer übertragen werden.

Eine bevorzugte Weiterbildung der erfindungsgemäßen Vorrichtung sieht zusätzlich eine Zahnkupplung zum formschlüssigen Koppeln von Antriebsläufer und Abtriebsläufer vor, wobei mit dem Antriebsläufer und dem Abtriebsläufer jeweils miteinander in Eingriff bringbare Kupplungsteile gekoppelt sind. Am Antriebs- und am Abtriebsläufer sind bevorzugt zusätzliche Kupplungsteile vorgesehen, welche zur Ausbildung eines Formschlusses zwischen dem Antriebsläufer und dem Abtriebsläufer miteinander in Wirkverbindung bringbar sind. Mit dem Vorsehen einer Verzahnung am Antriebsläufer und am Abtriebsläufer, welche miteinander in Eingriff gebracht sind, wenn das Füllrohr in seiner in die Darmbremseinheit eingefahrenen Stellung angeordnet ist, ist die schlupffreie Übertragung des Drehmomentes weiter verbessert. In einer Ausführungsform der Erfindung erfolgt über die Dauermagneten am Antriebsläufer und am Abtriebsläufer bevorzugt eine Vorausrichtung von Antriebsläufer und Abtriebsläufer zueinander. Die Kupplungsteile der Zahnkupplung werden durch die sonst unabhängig voneinander verstellbaren Komponenten der Magnetkupplung fluchtend zueinander ausgerichtet.

Vorzugsweise weisen die Kupplungsteile jeweils mehrere Formschlusselemente auf, welche vorzugsweise am Antriebsläufer in radialer Richtung nach innen und am Abtriebsläufer in radialer Richtung nach außen vorstehen und dazu eingerichtet sind, durch eine Bewegung von Antriebsläufer und Abtriebsläufer in Längsrichtung des Füllrohres in Eingriff miteinander und außer Eingriff voneinander gebracht zu werden. Das Kupplungsteil am Antriebsläufer weist bevorzugt eine Innenverzahnung und das Kupplungsteil am Abtriebsläufer weist bevorzugt eine Außenverzahnung auf. Die Innen- und Außenverzahnung können durch einfaches Bewegen des Abtriebsläufers in Achsrichtung zum bevorzugt feststehenden Antriebsläufers in Eingriff bzw. in Kontakt miteinander gebracht werden. Bevorzugt ist zwischen den Kupplungsteilen am Antriebs- und am Abtriebsläufer eine anschlagfreie Verbindung vorgesehen, sodass mittels des mit dem Abtriebsläufer gekoppelten Füllrohrs während des Abdrehvorgangs im Bedarfsfall ein Nachrücken des Füllrohres in Richtung der Darmbremseinheit erfolgen kann.

Vorzugsweise weist die Verzahnung an jedem der Kupplungsbereiche einen Einlaufbereich mit konisch zulaufenden Führungsflächen auf, welche das Einfahren der nach innen beziehungsweise außen vorstehenden Formschlusselemente der jeweiligen Verzahnungen ineinander vereinfachen.

Die Vorrichtung zeichnet sich ferner durch eine Darmbremseinheit aus, welche mit einer auf das Füllrohr aufgezogenen Hülle im Bereich des gegenüberliegenden, zweiten, freien Endes des Füllrohres in Wirkverbindung bringbar ist. Mithilfe der Darmbremseinheit wird eine über das Füllrohr aufgezogene Hülle während des Befüllens mit der pastösen Masse straff gehalten. Dazu weist die Darmbremseinheit einen mit der schlauchförmigen Hülle und auch mit dem Füllrohr in Anlage bringbaren Darmbremsring auf, welcher an der Halterung für die Darmbremseinheit drehbar aufgenommen ist. Die Darmbremseinheit ist bevorzugt an der erfindungsgemäßen Füllvorrichtung in ihrer Position unveränderlich angeordnet. Durch das Verschieben des Füllrohres in seine Achsrichtung wird nunmehr durch das Füllrohr selbst die notwendige Relativbewegung zum Außerkontaktbringen des Füllrohres von der Darmbremseinheit ausgeführt. Nach dem Außerkontaktbringen des Füllrohres mit der Darmbremseinheit kann eine neue schlauchförmige Hülle automatisiert oder von Hand auf das Füllrohr aufgezogen werden.

Ein weiterer Aspekt der Erfindung betrifft ferner eine Füllmaschine zum Herstellen von Würsten aus pastöser Masse, insbesondere aus Wurstbrät, mit wenigstens einem Fülltrichter zum Aufnehmen der pastösen Masse, einer Förderpumpe zum Fördern der pastösen Massen, und mit einer Vorrichtung zum Füllen von schlauchförmigen Hüllen mit einer pastösen Masse, insbesondere von Darmraupen mit Wurstbrät, nach einer der vorstehend beschriebenen bevorzugten Ausführungsformen.

An einer Füllmaschine mit einer derartig erfindungsgemäß ausgebildeten Füllvorrichtung, wird mittels einer Magnetkupplung ein Drehmoment von einer Antriebseinheit auf ein Füllrohr übertragen, ohne dass das Füllrohr mit der Antriebseinheit zwingend mechanisch zu koppeln ist. Zudem ist es möglich, anstatt der Darmbremseinheit, das Füllrohr einfach in axialer Richtung zu bewegen und somit in eine Beladeposition zu überführen. In der Beladeposition kann eine neue Hülle aufgezogen werden. Zum erneuten Inkontaktbringen mit der Darmbremseinheit wird das Füllrohr wiederum axial in die entgegensetzte Richtung bewegt, insbesondere verschoben. Dadurch gelangt das mit der neuen schlauchförmigen Hülle bestückte freie Ende des Füllrohres wieder in Kontakt mit der bevorzugt feststehenden Darmbremseinheit. Mit dem Einfahren des Füllrohres in die Darmbremseinheit wird ferner die kraftschlüssige Verbindung zwischen einem Antriebsläufer und einem Abtriebsläufer der Magnetkupplung hergestellt. Antriebsläufer und Abtriebsläufer wirken dabei so miteinander zusammen, dass die drehmomentübertragende Verbindung zwischen der Antriebseinheit und dem intervallartig anzutreibenden Füllrohr gewährleistet ist. Bevorzugt ist die Magnetkupplung eine berührungslose Magnetkupplung, welche in einer Ausführungsform als Dauermagnetkupplung ausgebildet ist, wobei vorzugsweise der Antriebs- und/oder Abtriebsläufer jeweils eine oder mehrere Dauermagneten aufweisen.

Vorteilhafte Weiterbildungen der erfindungsgemäßen Füllmaschine ergeben sich aus dem vorstehenden Erläuterungen bzw. oben stehend beschriebenen Weiterbildungen zur erfindungsgemäßen Füllvorrichtung und deren bevorzugten Ausgestaltungen. Insoweit wird auf die oben stehenden Ausführungen verwiesen.

Nachfolgend wird die Erfindung anhand eines möglichen Ausführungsbeispiels unter Bezugnahme auf die nachfolgenden Figuren näher beschrieben. Hierbei zeigen:
- Fig. 1: eine perspektivische Ansicht einer Maschine zum Füllen schlauchförmiger Hüllen mit einer ersten Ausführungsform einer erfindungsgemäßen Füllvorrichtung;
- Fig. 2 und 3: perspektivische Ansichten der Füllvorrichtung nach Fig. 1 in verschiedenen Positionen des Füllrohres;
- Fig. 4: eine perspektivische Ansicht einer Maschine zum Füllen schlauchförmiger Hüllen mit einem zweiten Ausführungsbeispiel einer erfindungsgemäßen Füllvorrichtung;
- Fig. 5 und 6: eine perspektivische Ansicht der erfindungsgemäßen Füllvorrichtung nach Fig. 4 in verschiedenen Positionen;
- Fig. 7: eine Schnittdarstellung eines ersten Ausführungsbeispiels einer erfindungsgemäßen Magnetkupplung; und
- Fig. 8: eine perspektivische Ansicht einer zweiten Ausführungsform einer erfindungsgemäßen Magnetkupplung.

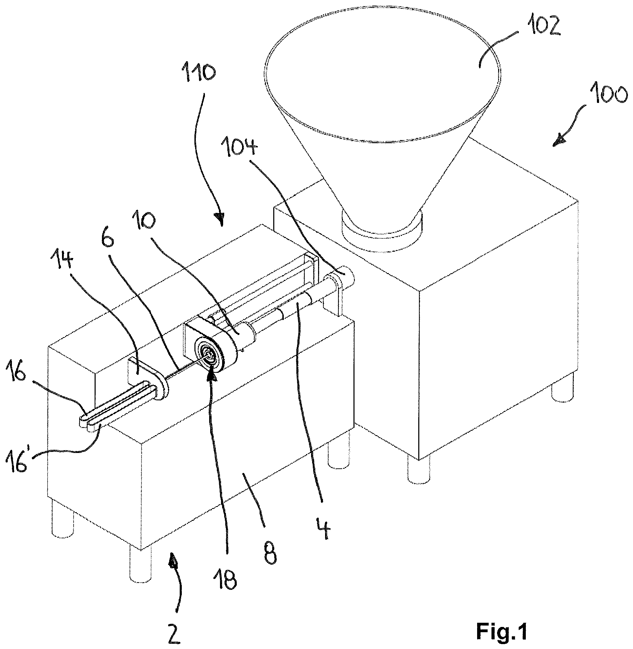

Fig. 1 zeigt eine Maschine 100 zum Füllen schlauchförmiger Hüllen, insbesondere von Kunst- und Naturdärmen, in Verbindung mit einem Vorsatzgerät 110. Das Vorsatzgerät ist eine erfindungsgemäße Füllvorrichtung 2 zum Füllen von schlauchförmigen Hüllen mit einer pastösen Masse. Die Füllmaschine 100 weist ferner einen Fülltrichter 102 und einen Extrusionskopf 104 auf. Der Extrusionskopf 104 ist über eine Zuführleitung 4 mit einem Füllrohr 6 der Füllvorrichtung 2 medienleitend gekoppelt. Die Füllmaschine 100 umfasst ferner wenigstens eine nicht näher dargestellte Förderpumpe zum Fördern einer in den Fülltrichter 102 eingegeben Masse in Richtung des Extrusionskopfes 104 und der daran angeschlossenen Zuführleitung 4.

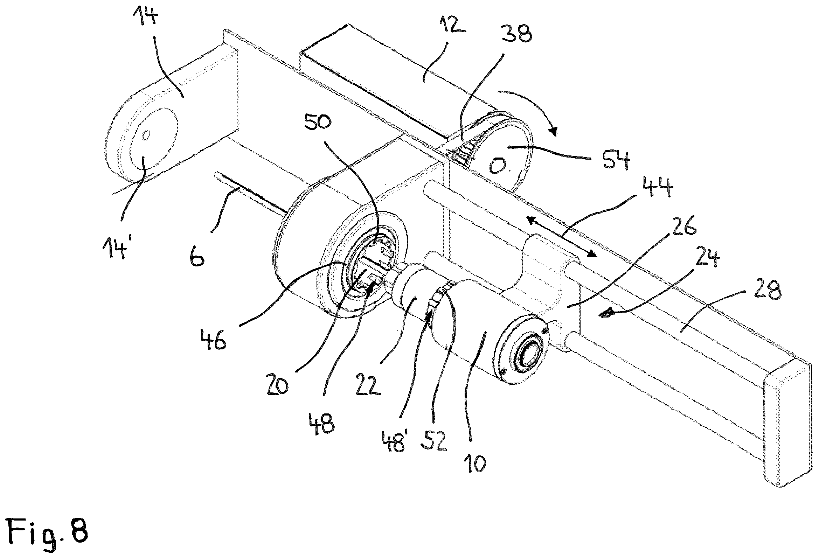

Die Füllvorrichtung 2 umfasst ein Maschinengestell 8, an dem das Füllrohr 6, das um seine Längsachse dreh- und antreibbar ist, an einem Aufnahmeteil 10 drehbeweglich aufgenommen ist. Die Füllvorrichtung 2 umfasst ferner eine Antriebseinheit 12 (Fig. 8) zum Antreiben des Füllrohres 6. An der Füllvorrichtung 2 ist eine Darmbremseinheit 14 mit zumindest einem drehbar an der Darmbremseinheit gelagerten Darmbremsring 14' angeordnet. Der Darmbremseinheit 14 sind in Förderrichtung der herzustellenden Würste nachgeschaltet zwei im Abstand zueinander in einer horizontalen Ebene verlaufende Förderelemente 16, 16' angeordnet. Über die Förderelemente 16, 16' erfolgt das Abführen eines zumindest mit der Füllvorrichtung 2 hergestellten, in einzelne Abschnitte unterteilten Wurststranges.

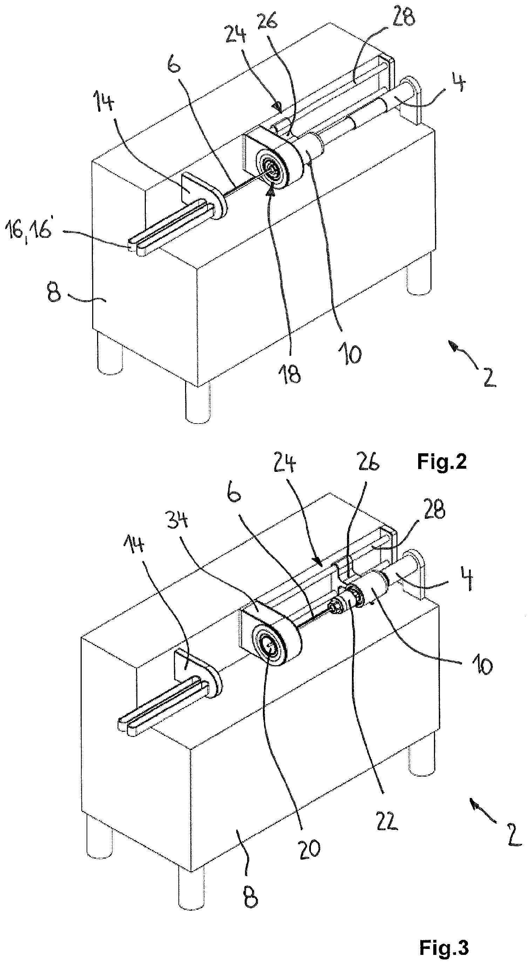

Die Fig. 2 und 3 zeigen eine vergrößerte Ansicht der erfindungsgemäßen Füllvorrichtung 2. Die Füllvorrichtung weist als Übertragungselement der von der Antriebseinheit 12 (Fig. 8) erzeugten Drehbewegung auf das Füllrohr 6 eine Magnetkupplung 18 zum Herstellen und Trennen einer zumindest kraftschlüssigen Drehmomentübertragung zwischen der Antriebseinheit 12 und dem Füllrohr 6 auf. Die Magnetkupplung 18 ist als berührungslose Magnetkupplung ausgebildet und weist einen Antriebsläufer 20 und einen Abtriebsläufer 22 auf. Der Antriebsläufer 20 ist drehfest mit der Antriebseinheit 12 verbunden. Der Abtriebsläufer 22 ist drehfest mit dem Füllrohr 6 gekoppelt. Der den Antriebsläufer 20 umfassende Teil der Magnetkupplung 18 ist in Achsrichtung des Füllrohres 6 feststehend am Maschinengestell 8 der Füllvorrichtung 2 angeordnet. Der Abtriebsläufer 22 ist zusammen mit dem Füllrohr 6 drehbar an dem Aufnahmeteil 10 angeordnet. Das Aufnahmeteil 10 selbst ist mittels einer Führungseinrichtung 24 in Längsrichtung des Füllrohres 6 schiebebeweglich gelagert. Der Abtriebsläufer 22 ist dem auslassseitigen Ende der in der vorliegenden Ausführung drehbar am Aufnahmeteil 10 aufgenommenen Zuführleitung 4 zugeordnet.

In der vorliegenden Ausführungsform weist die Führungseinrichtung 24 einen Führungsschlitten 26 und zwei den Führungsschlitten 26 aufnehmende Führungselemente 28 auf. Das Aufnahmeteil ist so am Führungsschlitten 26 angeordnet, dass die Drehachse des Füllrohres 6 und des Abtriebsläufers 22 koaxial zur Drehachse des Antriebsläufers 20 und des Darmbremsringes 14' angeordnet ist. Ebenfalls sind die Drehachse des Füllrohres 6 und die Längsachse der Zuführleitung 4 koaxial angeordnet. Die Zuführleitung 4 ist in der vorliegenden Ausführungsform als Teleskoprohr ausgebildet.

Die Fig. 2 zeigt die Füll- bzw. Abdrehposition des Füllrohres 6, wobei der Antriebsläufer 20 und der Abtriebsläufer 22 in kraftschlüssiger Wirkverbindung miteinander gebracht sind. Der Antriebsläufer 20 ist als Außenläufer und der Abtriebsläufer 22 ist als Innenläufer ausgebildet. Der Antriebsläufer 20 und der Abtriebsläufer 22 überdecken somit zumindest abschnittsweise einander in axialer Richtung. Antriebsläufer und Abtriebsläufer berühren einander nicht. Zum Überführen des Füllrohres 6 aus seiner Füllposition in Fig. 2 in die Beladeposition in Fig. 3 erfolgt das Bewegen des Führungsschlittens 26 und des daran angeordneten Aufnahmeteils 10 durch einen nicht näher gezeigten Verstellantrieb. Der Verstellantrieb bewegt das Aufnahmeteil 10 mitsamt dem Abtriebsläufer 22 und dem Füllrohr 6 in Längs- bzw. in axialer Richtung zur Drehachse des Füllrohres.

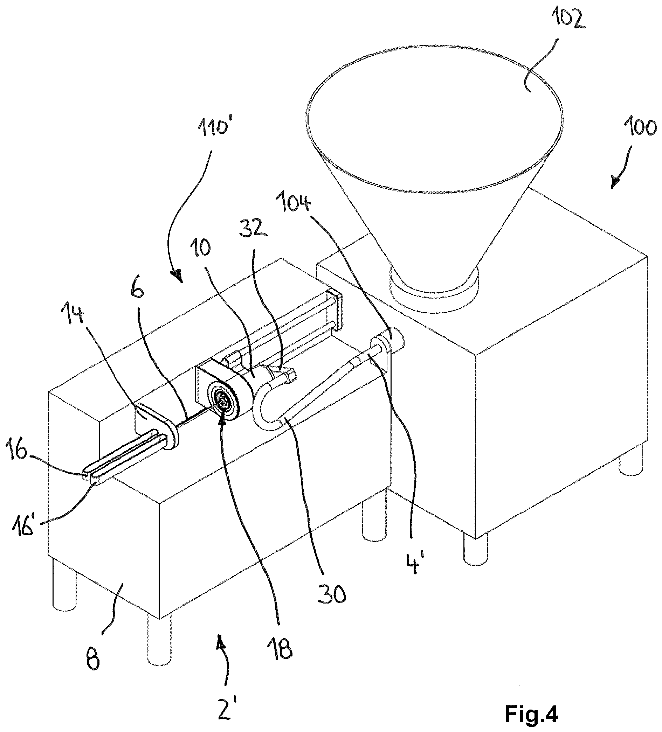

In Fig. 4 ist eine alternative Ausführungsform einer Füllmaschine 100 gezeigt, welche ebenfalls einen Fülltrichter 102 und einen Extrusionskopf 104 aufweist. Der Füllmaschine 100 ist wiederum eine Füllvorrichtung 2' als Vorsatzgerät 110' vorgeschaltet. Die Füllvorrichtung 2' ist über eine Zuführleitung 4' mit dem Füllrohr 6 der Füllvorrichtung 2' medienleitend gekoppelt. Die Füllvorrichtung 2' unterscheidet sich von der in den Fig. 1 - 3 gezeigten Füllvorrichtung 2 durch die Ausgestaltung der Zuführleitung 4'. Der Extrusionskopf 104 ist mit dem Füllrohr 6 mittels eines zumindest einen Abschnitt der Zuführleitung 4' ausbildenden Förderschlauchs 30 verbunden. Der Extrusionskopf 104 und die Mittenachse des dreh- und antreibbar aufgenommenen Füllrohres 6 sind in der vorliegenden Ausführungsform in Fig. 4 nicht koaxial angeordnet bzw. ausgerichtet. Die Mittenachse des Extrusionskopfes 104 und die Längs- bzw. Drehachse des Füllrohres 6 weisen einen seitlichen Versatz zueinander auf.

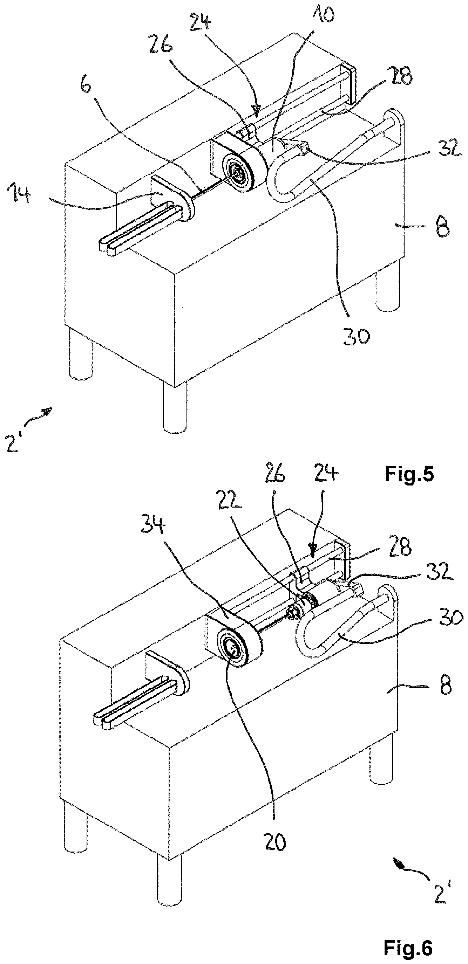

Fig. 5 zeigt die Befüllposition, in der das Füllen einer auf dem Füllrohr 6 aufgezogenen schlauchförmigen Hülle erfolgt. Der Abtriebsläufer 22 ist in der Befüllposition vollständig in den Antriebsläufer 20 der Magnetkupplung 18 eingefahren. In der Befüllposition ist das vordere bzw. freie Ende des Füllrohres 6 ebenfalls in den Darmbremsring 14'(Fig. 8) der Darmbremseinheit 14 eingefahren. Die einen Förderschlauch 30 aufweisende Zuführleitung 4' umfasst ferner ein im Wesentlichen senkrecht zur Längsachse des Füllrohres 6 abstehendes Verbindungsstück 32. Das Verbindungsstück 32 ist mit einem Ende fluidleitend mit dem Aufnahmeteil 10 verbunden ist. An dem entgegengesetzten Ende des Verbindungsstück 32 ist ein Ende des Förderschlauches 30 angeschlossen. Fig. 6 zeigt wiederum die Beladeposition des Füllrohrs 6 zum Bestücken mit einer neuen Hülle. Der Förderschlauch 30 der Zuführleitung 4' ist in einer Schlaufe gelegt. Die Einströmrichtung der pastösen Masse in den Förderschlauch und die Austrittsrichtung der pastösen Masse aus dem Förderschlauch 30 weisen in der vorliegenden Ausführungsform einander entgegengesetzte Richtungen auf.

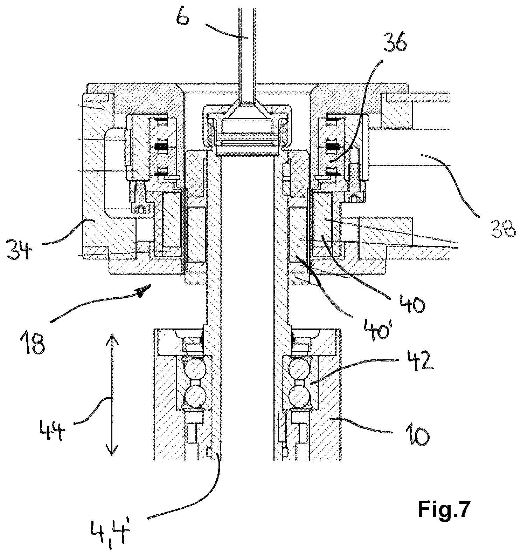

Fig. 7 zeigt eine Schnittdarstellung der erfindungsgemäßen Magnetkupplung 18. Der Antriebsläufer ist innerhalb eines Abdrehgehäuses 34, siehe auch die Fig.1 bis 6, über wenigstens ein Drehlager 36 drehbar aufgenommen. Der Antriebsläufer 20 ist über einen Zahnriemen 38 mit der Antriebseinrichtung 12 (Fig. 8) eine Drehbewegung übertragend gekoppelt. Der Abtriebsläufer 22 wird zur kraftschlüssigen Verbindung von Antriebsläufer 20 und Abtriebsläufer 22 und zur Übertragung der Drehbewegung vom Antriebsläufer auf den Abtriebsläufer in den Antriebsläufer 20 eingefahren. Antriebsläufer 20 und Abtriebsläufer 22 weisen mehrere Dauermagneten 40, 40' auf. Einander gegenüberstehende Magneten von Antriebsläufer 20 und Abtriebsläufer 22 weisen unterschiedliche Polaritäten auf. Der Abtriebsläufer 22 ist an einem Abschnitt der Zuführleitung 4, 4' angeordnet, die über ein Drehlager 42 am Aufnahmeteil 10 gehalten ist. Das Füllrohr 6 ist am freien Ende der Zuführleitung 4, 4' angeordnet. Das Aufnahmeteil 10 ist zusammen mit der Zuführleitung 4, 4' und dem Füllrohr 6 in Richtung der Längs- bzw. Drehachse von Zuführleitung 4, 4' und Füllrohr 6 verschieblich aufgenommen, wie der Bewegungspfeil 44 andeuten soll.

Fig.8 zeigt eine perspektivische Ansicht von Teilkomponenten der erfindungsgemäßen Füllvorrichtung 2. Neben der Magnetkupplung 18 mit ihrem Antriebsläufer 20 und ihrem Abtriebsläufer 22 ist in der gezeigten Ausführungsform zusätzlich eine Zahnkupplung 46 mit ineinandergreifenden Kupplungsteilen 48, 48' vorgesehen. Das am Antriebsläufer angeordnete bzw. ausgebildete Kupplungsteil 48 weist nach innen vorstehende Formschlusselemente auf. Das am Abtriebsläufer 22 angeordnete bzw. ausgebildete Kupplungsteil 48' weist nach außen vorstehende Formschlusselemente 52 auf. Neben der kraftschlüssigen Verbindung durch die Dauermagneten von Antriebsläufer 20 und Abtriebsläufer 22 wird beim Einfahren des Abtriebsläufers 22 in den Antriebsläufer 20 eine Formschlussverbindung zwischen den Kupplungsteilen 48, 48' hergestellt. Mit dem Einfahren wird auch das freie Ende des Füllrohres 6 in den Darmbremsring 14' der Darmbremseinheit 14 gekoppelt. Bevorzugt erfolgt durch die Dauermagneten an dem Antriebsläufer und dem Abtriebsläufer eine Vorausrichtung der Kupplungsteile der Zahnkupplung 46 zueinander. Damit ist das Einfahren der Kupplungsteile 48, 48' ineinander erleichtert. Auch in dieser Ausführungsform erfolgt das Antreiben des Füllrohres 6 mittels der Antriebseinheit 12, die ein mit dem Zahnriemen 38 zusammenwirkendes Antriebsrad 54 aufweist. Der Führungsschlitten 26 der Führungseinrichtung 24 ist über zwei parallel zur Längs- bzw. Drehachse des Füllrohres 6 angeordnete Führungsrohre 28 schiebebeweglich gehalten.

Gleiche Bauteile sind mit denselben Bezugszeichen bezeichnet.

### Bezugszeichenliste

- 2, 2': Füllvorrichtung
- 4, 4': Zuführleitung
- 6: Füllrohr
- 8: Maschinengestell
- 10: Aufnahmeteil
- 12: Antriebseinheit
- 14: Darmbremseinheit
- 14': Darmbremsring
- 16, 16': Förderelemente
- 18: Magnetkupplung
- 20: Antriebsläufer
- 22: Abtriebsläufer
- 24: Führungseinrichtung
- 26: Führungsschlitten
- 28: Führungsrohr
- 30: Förderschlauch
- 32: Verbindungsstück
- 34: Abdrehgehäuse
- 36: Drehlager
- 38: Zahnriemen
- 40, 40': Dauermagnet
- 42: Drehlager
- 44: Bewegungspfeil
- 46: Zahnkupplung
- 48, 48': Kupplungsteil
- 50, 52: Formschlusselement
- 54: Antriebsrad
- 100: Maschine
- 102: Füllvorrichtung
- 104: Extrusionskopf
- 110, 110': Vorsatzgerät

## Patentansprüche

1. Vorrichtung zum Füllen von schlauchförmigen Hüllen mit einer pastösen Masse, insbesondere von Darmraupen mit Wurstbrät, mit
- zumindest einem um seine Längsachse dreh- und antreibbaren Füllrohr (6), auf das eine mit der Masse befüllbare Hülle aufziehbar ist,
- einem Aufnahmeteil (10), an dem das Füllrohr (6) drehbeweglich aufgenommen ist,
- einer Antriebseinheit (12) zum Antreiben des Füllrohres (6), und
mit einer Magnetkupplung (18) zum Herstellen und Trennen einer zumindest kraftschlüssigen Drehmomentübertragung zwischen der Antriebseinheit (12) und dem Füllrohr (6), welche einen Antriebsläufer (20) und einem zum Antriebsläufer (20) in Längsrichtung des Füllrohres (12) verstellbaren Abtriebsläufer (22) aufweist,
**dadurch gekennzeichnet, dass** die Magnetkupplung (18) als eine berührungslose Magnetkupplung mit einem Innenläufer und einem Außenläufer mit koaxial angeordneten Drehachsen ausgebildet ist, welche zur Übertragung des Drehmomentes in axialer Richtung zumindest abschnittsweise einander überdecken.

2. Vorrichtung nach Anspruch 1,
**dadurch gekennzeichnet, dass** der Antriebsläufer (20) als Außenläufer und der Abtriebsläufer (22) als Innenläufer ausgebildet sind.

3. Vorrichtung nach Anspruch 1 oder 2,
**dadurch gekennzeichnet, dass** die Magnetkupplung (18) als Dauermagnetkupplung ausgebildet ist, wobei vorzugsweise der Antriebsläufer (20) und/oder der Abtriebsläufer (22) jeweils eine oder mehrere Dauermagneten (40, 40') aufweisen.

4. Vorrichtung nach Anspruch 1 oder 2,
**dadurch gekennzeichnet, dass** die Magnetkupplung (18) als Elektromagnetkupplung ausgebildet ist, wobei vorzugsweise der Antriebsläufer (20) und/oder der Abtriebsläufer (22) jeweils eine oder mehrere Elektromagneten aufweisen.

5. Vorrichtung nach einem der vorstehenden Ansprüche,
**dadurch gekennzeichnet, dass** das Aufnahmeteil (10) mittels einer Führungseinrichtung (24) in Längsrichtung des Füllrohres (6) schiebebeweglich gelagert ist.

6. Vorrichtung nach Anspruch 5,
**dadurch gekennzeichnet, dass** die Führungseinrichtung (24) wenigstens einen Führungsschlitten (26) aufweist, der entlang einer parallel zum Füllrohr (6) verlaufenden Führung bewegbar ist.

7. Vorrichtung nach einem der vorstehenden Ansprüche,
**dadurch gekennzeichnet, dass** der Abtriebsläufer (22) drehfest mit dem Füllrohr (26) gekoppelt ist.

8. Vorrichtung nach einem der vorstehenden Ansprüche,
**dadurch gekennzeichnet, dass** der Abtriebsläufer (22) an einer Zuführleitung (4, 4') für die pastöse Masse angeordnet ist, an deren freien Ende ein erstes Ende des Füllrohres (6) angeordnet und/oder wobei die Zuführleitung (4, 4') vorzugsweise zumindest mit einem Abschnitt drehbar am Aufnahmeteil (10) gelagert ist.

9. Vorrichtung nach Anspruch 8,
**dadurch gekennzeichnet, dass** die Zuführleitung (4) als längenveränderliches Teleskoprohr oder ein Abschnitt der Zuführleitung (4') als verformbarer Förderschlauch (30) ausgebildet ist.

10. Vorrichtung nach einem der vorstehenden Ansprüche,
**dadurch gekennzeichnet, dass** der Antriebsläufer (20), bezogen auf seine Drehachse, in Achsrichtung feststehend zur Antriebseinheit (12) angeordnet ist, vorzugsweise innerhalb eines Abdrehgehäuses (34) und/oder
dass der Antriebsläufer (20) mittels eines Zahnriemens (38) mit der Antriebseinheit (12) eine Drehbewegung übertragend gekoppelt ist.

11. Vorrichtung nach einem der vorstehenden Ansprüche,
**gekennzeichnet durch** zusätzliche eine Zahnkupplung (46) zum formschlüssigen Koppeln von Antriebsläufer (20) und Abtriebsläufer (20), wobei mit dem Antriebsläufer (20) und dem Abtriebsläufer (22) jeweils miteinander in Eingriff bringbare Kupplungsteile (48, 48') gekoppelt sind.

12. Vorrichtung nach Anspruch 11,
**dadurch gekennzeichnet, dass** die Kupplungsteile (48,48') mehrere Formschlusselemente (50, 52) aufweisen, welche vorzugsweise am Antriebsläufer (20) in radialer Richtung nach innen und am Abtriebsläufer (22) in radialer Richtung nach außen vorstehen, welche dazu eingerichtet sind, durch eine Bewegung von Antriebsläufer (20) und Abtriebsläufer (22) in Längsrichtung des Füllrohres (6) in Eingriff miteinander und außer Eingriff voneinander gebracht zu werden.

13. Vorrichtung nach Anspruch 11 oder 12,
**dadurch gekennzeichnet, dass** die Zahnkupplung (46) im Betrieb der Vorrichtung dazu eingerichtet ist, dass sich Formschlusselemente (50, 52) von Antriebsläufer (20) und Abtriebsläufer (22) axial zueinander bewegen.

14. Vorrichtung nach einem der vorstehenden Ansprüche,
**gekennzeichnet durch** eine Darmbremseinheit (14), welche mit einer auf das Füllrohr (6) aufgezogenen Hülle im Bereich des gegenüberliegenden zweiten, offenen Endes des Füllrohres (6) in Wirkverbindung bringbar ist.

15. Füllmaschine (100) zum Herstellen von Würstchen aus pastöser Masse, insbesondere aus Wurstbrät,
- mit einem Fülltrichter (102) zum Aufnehmen der pastösen Masse,
- einer Förderpumpe zum Fördern der pastösen Masse, und
- mit einer Vorrichtung (2) zum Füllen von schlauchförmigen Hüllen (6) mit einer pastösen Masse, insbesondere von Darmraupen mit Wurstbrät, nach einem der Ansprüche 1 bis 14.

## Claims

1. Apparatus for filling tubular cases with a pasty material, in particular gathered sausage skin casings with sausagemeat, comprising
- at least one filling tube (6) which is rotatable and drivable about its longitudinal axis and on to which a case which can be filled with the material can be pulled,
- a receiving portion (10) at which the filling tube (6) is rotatably received,
- a drive unit (12) for driving the filling tube (6), and
- a magnetic coupling (18) for making and breaking an at least force-locking torque transmission between the drive unit (12) and the filling tube (6), which has a drive rotor (20) and a driven roller (22) which is displaceable relative to the drive rotor (20) in the longitudinal direction of the filling tube (12)
**characterised in that** the magnetic coupling (18) is a contact-less magnetic coupling with an internal rotor and an external rotor with coaxially arranged axes of rotation, which cover each other over at least portion-wise for transmission of the torque in the axial direction.

2. Apparatus as set forth in claim 1
**characterised in that** the drive rotor (20) is in the form of an external rotor and the driven rotor (22) is in the form of an internal rotor.

3. Apparatus as set forth in claim 1 or claim 2
**characterised in that** the magnetic coupling (18) is in the form of a permanent magnet coupling, wherein preferably the drive rotor (20) and/or the driven rotor (22) respectively have one or more permanent magnets (40, 40').

4. Apparatus as set forth in claim 1 or claim 2,
**characterised in that** the magnetic coupling (18) is in the form of an electromagnetic coupling, wherein preferably the drive rotor (20) and/or the driven rotor (22) respectively have one or more electromagnets.

5. Apparatus as set forth in one of the preceding claims
**characterised in that** the receiving portion (10) is mounted displaceably in the longitudinal direction of the filling tube (6) by means of a guide device (24).

6. Apparatus as set forth in claim 5
**characterised in that** the guide device (24) has at least one guide carriage (26) moveable along a guide extending parallel to the filling tube (6).

7. Apparatus as set forth in one of the preceding claims
**characterised in that** the driven rotor (22) is non-rotatably coupled to the filling tube (6).

8. Apparatus as set forth in one of the preceding claims
**characterised in that** the driven rotor (22) is arranged at a feed conduit (4, 4') for the pasty material, at the free end of which a first end of the filling tube (6) is disposed, and/or wherein the feed conduit (4, 4') is preferably mounted at least with a portion rotatably to the receiving portion (10).

9. Apparatus as set forth in claim 8
**characterised in that** the feed conduit (4) is in the form of a variable-length telescopic tube or a portion of the feed conduit (4') is in the form of a deformable conveyor hose (30).

10. Apparatus as set forth in one of the preceding claims
**characterised in that** the drive rotor (20) with respect to its axis of rotation is arranged stationarily in the axial direction with respect to the drive unit (20), preferably within a twist-off housing (34), and/or
the drive rotor (20) is coupled to the drive unit (12) for transmitting a rotary movement by means of toothed belt (38).

11. Apparatus as set forth in one of the preceding claims
**characterised by** in addition a tooth coupling (46) for positively lockingly coupling the drive rotor (20) and the driven rotor (22), wherein coupling portions (48, 48') which can be brought into engagement with each other are respectively coupled to the drive rotor (20) and the driven rotor (22).

12. Apparatus as set forth in claim 11
**characterised in that** the coupling portions (48, 48') have a plurality of positively locking elements (50, 52) which preferably project inwardly in the radial direction on the drive rotor (20) and outwardly in the radial direction on the driven rotor (22), which are adapted to be brought into engagement with each other and out of engagement with each other by a movement of the drive rotor (20) and the driven rotor (22) in the longitudinal direction of the filling tube (6).

13. Apparatus as set forth in claim 11 or claim 12
**characterised in that** the tooth coupling (46) is adapted in operation of the apparatus for positively locking elements (50, 52) of the drive rotor (20) and the driven rotor (22) to move axially relative to each other.

14. Apparatus as set forth in one of the preceding claims
**characterised by** a casing braking unit (14) which can be operatively connected to a case drawn on to the filling tube (6) in the region of the oppositely disposed second open end of the filling tube (6).

15. A filling machine (100) for producing sausages of pasty material, in particular sausagemeat, comprising
- a filling hopper (102) for receiving the pasty material,
- a conveyor pump for conveying the pasty material, and
- an apparatus (2) for filling tubular cases (6) with a pasty material, in particular gathered sausage skin casings with sausagemeat, as set forth in one of claims 1 through 14.

## Revendications

1. Dispositif de remplissage d'enveloppes en forme de tuyau avec une masse pâteuse, en particulier de boyaux en forme de chenille avec de la chair à saucisse, avec
- au moins un tube de remplissage (6) rotatif et entraînable autour de son axe longitudinal, sur lequel une enveloppe pouvant être remplie avec la masse peut être enfilée,
- une partie de réception (10) au niveau de laquelle le tube de remplissage (6) est reçu de manière mobile en rotation,
- une unité d'entraînement (12) pour l'entraînement du tube de remplissage (6), et
avec un couplage magnétique (18) pour l'établissement et la séparation d'une transmission de couple au moins à force entre l'unité d'entraînement (12) et le tube de remplissage (6) qui présente un rotor d'entraînement (20) et un rotor de sortie (22) déplaçable vers le rotor d'entraînement (20) dans le sens longitudinal du tube de remplissage (12),
**caractérisé en ce que** le couplage magnétique (18) est réalisé comme un couplage magnétique sans contact avec un rotor intérieur et un rotor extérieur avec des axes de rotation agencés coaxialement, qui se recouvrent l'un l'autre pour la transmission du couple dans le sens axial au moins par sections.

2. Dispositif selon la revendication 1,
**caractérisé en ce que** le rotor d'entraînement (20) est réalisé comme rotor extérieur et le rotor de sortie (22) est réalisé comme rotor intérieur.

3. Dispositif selon la revendication 1 ou 2,
**caractérisé en ce que** le couplage magnétique (18) est réalisé comme couplage à aimant permanent, dans lequel de préférence le rotor d'entraînement (20) et/ou le rotor de sortie (22) présentent respectivement un ou plusieurs aimants permanents (40, 40').

4. Dispositif selon la revendication 1 ou 2,
**caractérisé en ce que** le couplage magnétique (18) est réalisé comme couplage à électroaimant, dans lequel de préférence le rotor d'entraînement (20) et/ou le rotor de sortie (22) présentent respectivement un ou plusieurs électroaimants.

5. Dispositif selon l'une des revendications précédentes,
**caractérisé en ce que** la partie de réception (10) est logée de manière mobile en coulissement au moyen d'un dispositif de guidage (24) dans le sens longitudinal du tube de remplissage (6).

6. Dispositif selon la revendication 5,
**caractérisé en ce que** le dispositif de guidage (24) présente au moins un chariot de guidage (26) qui est mobile le long d'un guidage s'étendant parallèlement au tube de remplissage (6).

7. Dispositif selon l'une des revendications précédentes,
**caractérisé en ce que** le rotor de sortie (22) est couplé sans pouvoir tourner au tube de remplissage (26).

8. Dispositif selon l'une des revendications précédentes,
**caractérisé en ce que** le rotor de sortie (22) est agencé au niveau d'une conduite d'amenée (4, 4') pour la masse pâteuse, à l'extrémité libre de laquelle une première extrémité du tube de remplissage (6) est agencée et/ou dans lequel la conduite d'amenée (4, 4') est logée de préférence au moins avec une section de manière rotative au niveau de la partie de réception (10).

9. Dispositif selon la revendication 8,
**caractérisé en ce que** la conduite d'amenée (4) est réalisée comme tube télescopique modifiable en longueur ou une section de la conduite d'amenée (4') est réalisée comme tuyau de transport (30) déformable.

10. Dispositif selon l'une des revendications précédentes,
**caractérisé en ce que** le rotor d'entraînement (20), par rapport à son axe de rotation, est agencé dans le sens axial de manière fixe à l'unité d'entraînement (12), de préférence dans un boîtier de rotation (34) et/ou
**que** le rotor d'entraînement (20) est couplé en transmettant un mouvement rotatif au moyen d'une courroie dentée (38) à l'unité d'entraînement (12).

11. Dispositif selon l'une des revendications précédentes,
**caractérisé par** un couplage denté supplémentaire (46) pour le couplage à complémentarité de formes du rotor d'entraînement (20) et du rotor de sortie (20), dans lequel des parties de couplage (48, 48') pouvant être amenées en prise l'une avec l'autre respectivement sont couplées au rotor d'entraînement (20) et au rotor de sortie (22).

12. Dispositif selon la revendication 11,
**caractérisé en ce que** les parties de couplage (48, 48') présentent plusieurs éléments à complémentarité de formes (50, 52) qui dépassent vers l'intérieur de préférence au niveau du rotor d'entraînement (20) dans le sens radial et vers l'extérieur au niveau du rotor de sortie (22) dans le sens radial qui sont aménagés afin d'être amenés en prise l'un avec l'autre et hors prise l'un de l'autre par un mouvement du rotor d'entraînement (20) et du rotor de sortie (22) dans le sens longitudinal du tube de remplissage (6).

13. Dispositif selon la revendication 11 ou 12,
**caractérisé en ce que** le couplage denté (46) est aménagé en fonctionnement du dispositif afin que des éléments à complémentarité de formes (50, 52) du rotor d'entraînement (20) et du rotor de sortie (22) se déplacent axialement l'un vers l'autre.

14. Dispositif selon l'une des revendications précédentes,
**caractérisé par** une unité de freinage de boyau (14) qui peut être amenée en liaison active avec une enveloppe enfilée sur le tube de remplissage (6) dans la zone de la seconde extrémité ouverte opposée du tube de remplissage (6).

15. Machine de remplissage (100) pour la fabrication de saucisses à partir de masse pâteuse, en particulier à partir de chair à saucisse,
- avec un entonnoir de remplissage (102) pour la réception de la masse pâteuse,
- une pompe de refoulement pour le refoulement de la masse pâteuse, et
- avec un dispositif (2) pour le remplissage d'enveloppes en forme de tuyau (6) avec une masse pâteuse, en particulier de boyaux en forme de chenille avec de la chair à saucisse, selon l'une des revendications 1 à 14.
